# EUROPEAN PATENT APPLICATION

(11) **EP 2 037 122 A1**
(43) Date of publication of application: **18.03.2009**
(21) Application number: 07743578.2
(22) Date of filing: 17.05.2007
(51) Int. Cl.: F04B 27/08, F25B 1/02

(54) **COMPRESSOR**

(30) Priority: 26.05.2006 JP 2006146323
(71) Applicant: Sanden Corporation, Isesaki-shi, Gunma 372-8502 (JP)
(72) Inventor: BABA, Hiroshi, Isesaki-shi, Gunma 372-8502 (JP); ICHIKAWA, Yoshinobu, Isesaki-shi, Gunma 372-8502 (JP)
(74) Representative: Feldmeier, Jürgen
(86) International application number: PCT/JP2007/060143
(87) International publication number: WO 2007/138877

(57) **Abstract**

A reciprocating compressor in which cylinder bores are formed and a muffler device is provided. The internal space of the muffler device is divided into at least two compartments by a partition wall. A cylindrical body, which allows the two compartments to communicate with each other and has the length of 16 to 50% of the overall length of the internal space, is provided in the partition wall. In particular, the overall length of the internal space of the muffler device is set to be within the range of 100 to 120 mm and the length of the cylindrical body is set to be within the range of 20 to 50 mm. Consequently, the muffler device can effectively attenuate and reduce the pulsation generated from the compressor and can be manufactured at a low cost.

## Description

### Technical Field of the Invention

The present invention relates to, for example, a compressor which is used in an air conditioning system for vehicles, etc., and specifically, to a structure for providing a muffler device on a suction passageway or a discharge passageway.

### Background Art of the Invention

A multi-cylinder reciprocating compressor is known, for example, as a conventional compressor used in an air conditioning system for vehicles. Inside of a cylinder head of this compressor, for example, a discharge chamber at the central part and a schematic hollow ring-like suction chamber at the periphery part are provided by dividing the inside. The discharge chamber is communicated with a cylinder head discharge port and the suction chamber is communicated with a cylinder head suction port, respectively. After the compressor is driven, refrigerant gas, which is introduced from a circuit pipe connected with an evaporator into the suction chamber through the cylinder head suction port, pushes to open a suction valve (reed valve) when a piston present in a cylinder bore is in a suction stroke, and is sucked through each suction hole of a valve plate into the cylinder bore during the suction stroke, sequentially. Further, the suction valve is closed when a piston is in a compression stroke, and a discharge valve is pushed to be opened, the compressed refrigerant gas is discharged from each discharge hole of the valve plate into the discharge chamber sequentially, and the gas in the discharge chamber is finally discharged through the cylinder head discharge port into a circuit of an air conditioning system connected to a condenser.

Near the above-described cylinder head suction port or discharge port, in particular, near the suction port, a muffler device may be provided for reducing noises and vibrations. The muffler device is provided, for example, on the side of a cylinder block or a cylinder head (around the cylinder block or the cylinder head) so as to be formed integrally with the cylinder block and the cylinder head, and structured usually so that the muffler space is closed by an adaptor, etc. Alternatively, the muffler device is provided on the side of the cylinder block or the cylinder head to be formed integrally with the cylinder block or the cylinder head, the muffler space may be formed by assembling this cylinder block or cylinder head (Patent document 1 for example). A passageway for suction gas at the part where the muffler device is provided usually extends from the muffler device to an inlet of the cylinder head suction chamber in an axial direction of the compressor.
Patent document 1: JP-A- 8-254181

### Disclosure of the Invention

### Problems to be solved by the Invention

A multi-cylinder reciprocating compressor often has a problem that a pulsation, which is caused specifically when the compressor sucks refrigerant gas, is transmitted to suction pipes of an air conditioning system via the suction port and vibrates them to make a noise. To prevent it, the muffler device may be provided near the suction port as described above. The suction gas passageway including this muffler device extends in an axial direction of the compressor.

In order to reduce the pulsation of the suction gas, it is necessary to design a muffler device in correspondence with the frequency of the pulsation being generated. However, in order to deal with a relatively low frequency suction pulsation, generally the overall length of the muffler device becomes relatively long. Further, the sectional area of the muffler space (inner space of the muffler device) generally has to be designed at a large size to enhance the effect for reducing the pulsation by the muffler device.

In a case where the muffler device is provided on the side of (around) the compressor, however, a muffler device having a high pulsation reduction performance often cannot be provided, because the axial length of the compressor enough to deal with this condition often cannot be employed. Further, when an adaptor is used for the muffler device, the number of parts and the cost may be increased.

Accordingly, an object of the present invention is to provide a compressor with a low-cost muffler device which can effectively attenuate and reduce the pulsation (in particular, suction pulsation) generated from the reciprocating compressor.

### Means for solving the Problems

To achieve the above-described object, a compressor according to the present invention is a reciprocating compressor in which a plurality of cylinder bores are formed and a muffler device is provided, wherein an internal space of the muffler device is divided into at least two compartments by a partition wall, and to the partition wall, a cylindrical body which allows the two compartments to communicate with each other and has a length of 16 to 50% relative to the overall length of the internal space is provided (the first embodiment). In the first embodiment, although the partition wall typically divides the internal space into two compartments, division into three or more compartments is possible. Further, although the shape of the cylindrical body is typically a circular cylinder with a circular cross section, a cylinder with another cross section can be employed.

The muffler device in the first embodiment is applicable not only to a suction pulsation reduction but also to a discharge pulsation reduction, or to both of them.

In the first embodiment, the pulsation reduction is particularly effective in a condition where the length of the internal space of the muffler device and the length of the cylindrical body are both in specified ranges. Namely, it is preferable that the overall length of the internal space of the muffler device is in a range of 100 to 120 mm and the length of the cylindrical body is in a range of 20 to 50 mm.

Further, it is preferable that a wall of the muffler device is formed integrally with a cylinder head or a cylinder block, or both of the cylinder head and the cylinder block. Whereby, the number of parts can be reduced, the assembly can be simplified, and the cost can be reduced.

Further, it is preferable that the partition wall is formed by an elongated section of a valve plate interposed between a cylinder head and a cylinder block. Whereby, the number of parts can be more reduced by omitting an adaptor, etc. in the conventional structure, the assembly can be more simplified, and the cost can be more reduced.

Further, a compressor according to the present invention is a reciprocating compressor in which a plurality of cylinder bores are formed and a muffler device is provided, wherein a direction of gas flow in the muffler device is set at a circumferential direction of the compressor (the second embodiment). The purpose of the second embodiment is to ensure a length in the direction of gas flow required to perform a muffling function, in the circumferential direction of the compressor, and this embodiment is specifically effective in case where an enough length for the muffler device cannot be set in an axial direction of the compressor. Because the required length can be ensured relatively easily in the circumferential direction of the compressor, the muffler device with a target performance can be easily provided.

In the second embodiment, the muffler device may be provided around either a cylinder block or a cylinder head. It is preferably provided near the suction port in particular for reducing suction pulsation. Where, the muffler device in the second embodiment is applicable not only to the suction pulsation reduction but also the discharge pulsation reduction, or both of them.

In the second embodiment, an internal space of the muffler device can be formed by a wall which is formed integrally with a cylinder block and has an opening section at a cylinder head side and an elongated section of a valve plate interposed between the cylinder head and the cylinder block, the elongated section closing the opening section of the wall.

Alternatively, the internal space of the muffler device can be formed by a wall which is formed integrally with a cylinder head and has an opening section at a cylinder block side and an elongated section of a valve plate interposed between the cylinder head and the cylinder block, the elongated section closing the opening section of the wall. In any of the structures, the number of parts can be reduced by the integrated structure, the assembly can be simplified, and the cost can be reduced. Further, an adaptor, etc. in the conventional structure can be omitted by applying the structure where the elongated section of the valve plate closes the opening section, so that the number of parts can be more reduced, the assembly can be more simplified, and the cost can be more reduced.

Further in the second embodiment, the technical concept in the first embodiment can be developed in the second embodiment to improve a muffling function. Namely, a structure can be employed wherein the overall length in a direction of gas flow of an internal space of a muffler device is in a range of 100-120 mm, and the internal space can be divided into at least two compartments by a partition wall, and to the partition wall, a communication path communicating the two compartments with each other is provided. Also in the second embodiment, the partition wall typically divides the internal space into two compartments, but division into three or more compartments is possible.

The partition wall can be formed integrally with a cylinder block or a cylinder head. That makes unnecessary to increase the number of parts even in a case where the partition wall is provided.

The communication path between the two compartments can be formed by a notch or a hole provided in the partition wall. Alternatively, a structure can also be employed wherein the communication path is provided in the partition wall and formed by a cylindrical body which has the length in a direction of gas flow in a range of 20-50 mm. The latter construction can achieve as a performance as good as in the above-described first embodiment. Further, also in the second embodiment, the shape of the cylindrical body is typically a circular cylinder with a circular cross section, but a cylinder with another cross section may be possible.

The above-described compressors according to the present invention are suitable specifically as compressors used in air conditioning systems for vehicles which are required to reduce pulsations, as well as, to reduce the number of parts, to simplify the assembly, and to reduce the cost.

### Effect according to the Invention

Thus, according to the first embodiment of the present invention, an excellent effect for pulsation reduction can be obtained by the structures in that the partition wall divides the internal space of the muffler device and in that the cylindrical body for communication has the length in the specified range. A pulsation with relatively low frequency (about 500Hz-1000Hz) can be effectively reduced in particular by setting the overall length of the internal space of the muffler device in the range of 100-120 mm and by setting the length of the cylindrical body in the range of 20-50 mm.

Further, according to the second embodiment of the present invention, the circumferential space at the side of the compressor can be utilized efficiently as a space for providing a muffler device space, so that a muffler device having a target performance for pulsation reduction can be provided even in a case where a required length for the muffler device cannot be ensured in the axial direction of the compressor.

### Brief explanation of the drawings

[Fig. 1] Fig.1 is a vertical sectional view of a compressor according to an example 1 of the present invention.
[Fig. 2] Fig.2 is a vertical sectional view of a compressor according to an example 2 of the present invention.
[Fig. 3] Fig.3 is a vertical sectional view of a compressor according to an example 3 of the present invention.
[Fig. 4] Fig.4 is a vertical sectional view of a conventional compressor in which any muffler device is not provided.

### Explanation of symbols

1,20,40,60: compressor
2,43: cylinder block
3: cylinder bore
4: piston
5: drive shaft
6: hinge mechanism
7: inclined plate
8: shoe
9,26,44: cylinder head
10,28: suction port
11,27,52: suction chamber
12,30,47: valve plate
13: suction hole
14: discharge hole
15: discharge chamber
16: discharge port
21,41,61: muffler device
22,42: internal space
23,62: partition wall
24: first compartment
25: second compartment
29,46,64: wall of muffler device
31: cylindrical body
32,49: inlet
45: opening section
48: elongated section of valve plate
50: outlet
51: suction port-cum-communication path
63: notch as communication path
65,66: seal member

### The Best mode for carrying out the Invention

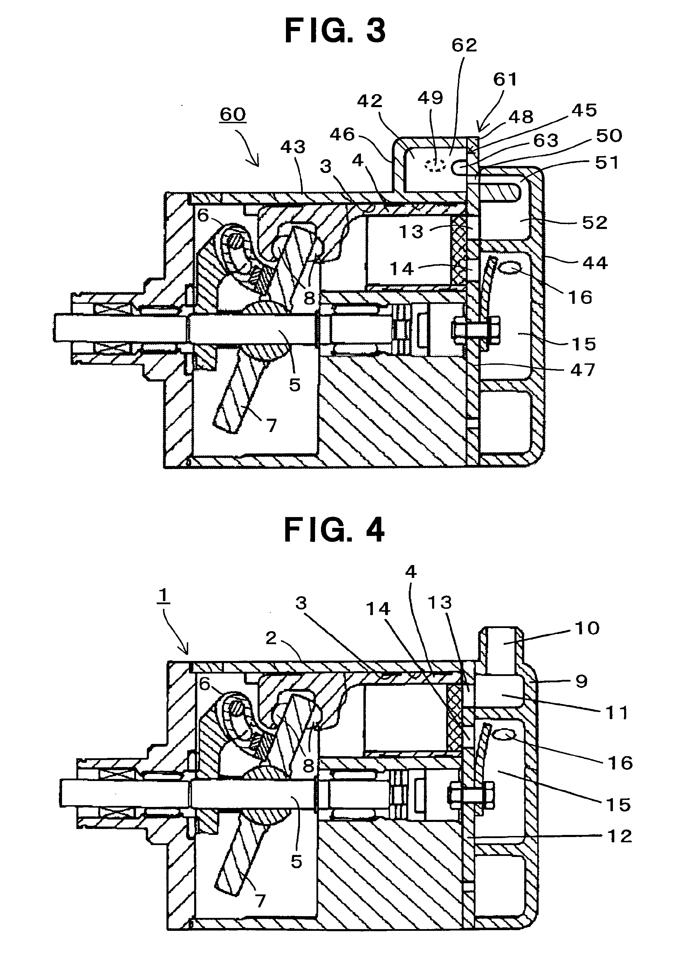

Hereinafter, desirable embodiments of compressors according to the present invention will be explained referring to figures.
First, for comparison, a construction of a conventional usual compressor in which any muffler device is not provided will be explained referring to Fig.4. Fig.4 shows an example of a multi-cylinder reciprocating variable displacement inclined plate type compressor. Compressor 1 has a plurality of cylinder bores 3 in cylinder block 2 and a piston 4 is inserted free to reciprocate in each cylinder bore 3. Rotating movement of inclined plate 7 which is rotated together with drive shaft 5 and is provided free to change its inclination angle via hinge mechanism 6 is transformed into reciprocating movement of piston 4 via sliding contact by a pair of shoes 8. In a suction stroke, gas (e.g. refrigerant gas) is introduced into cylinder bore 3 from suction port 10 in cylinder head 9 through suction chamber 11 and suction hole 13 formed in valve plate 12. Compressed gas in a compression stroke is delivered to an external circuit through discharge hole 14, discharge chamber 15 and discharge port 16. Though it is not shown in figures, a suction valve and a discharge valve comprised of reed valves are provided on suction hole 13 and discharge hole 14, respectively.

The present invention is applied to such a compressor 1. Examples 1-3 will be explained hereinafter. Although they show examples wherein muffler devices according to the present invention are provided at a suction passageway side, it is possible to provide similar muffler devices at a discharge passageway side.

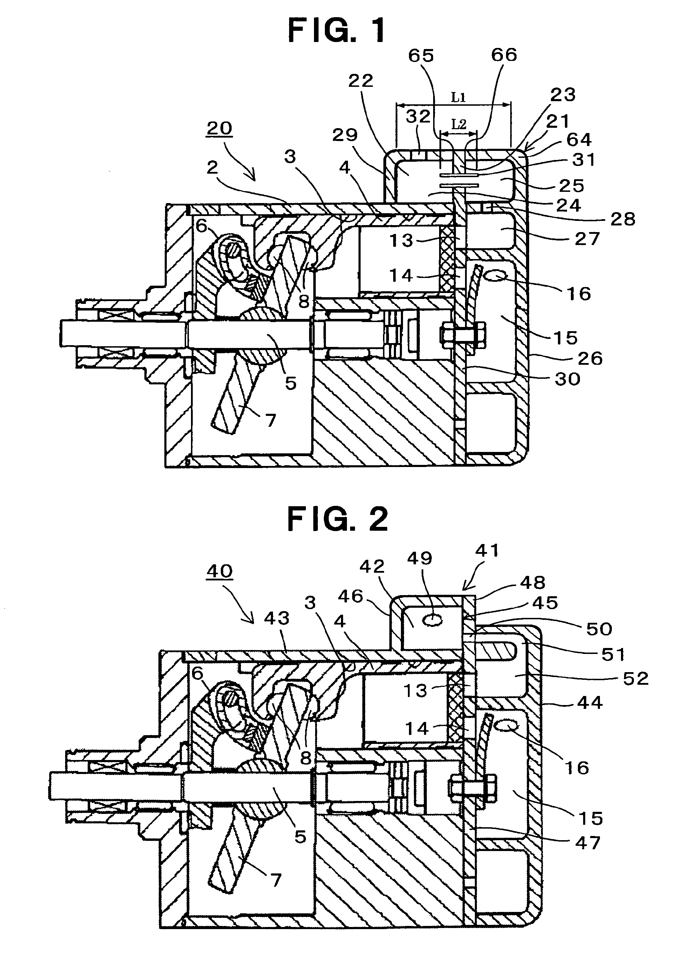

Fig.1 shows compressor 20 according to the example 1 of the present invention. Some explanations will be omitted by providing the same symbols as those given in Fig.4 to the common parts in compressor 20 with compressor 1 depicted in Fig.4 as shown in Fig.4 (similar manners are employed for examples 2,3 described later). Muffler device 21 is provided in compressor 20 and internal space 22 of muffler device 21 is divided by partition wall 23 into two compartments which are first compartment 24 and second compartment 25. The muffler device 21 is provided in a portion of suction port 28 communicated with suction chamber 27 formed in cylinder head 26, and second compartment 25 is communicated with suction chamber 27 via suction port 28. In this example, one wall 29 of muffler device 21 is formed integrally with cylinder block 2, and the other wall 64 of muffler device 21 is formed integrally with cylinder head 26. Partition wall 23 is formed integrally with valve plate 30 and formed by an elongated section of valve plate 30. Seal members 65,66 such as gaskets seal between valve plate 30 and cylinder block 2, and between valve plate 30 and cylinder head 26, respectively.

Cylindrical body 31 (circular cylindrical body in this example) which is communicated with chambers 24,25 and has a length L2 in a range of 16-50% relative to the overall length L1 of internal space 22 of muffler device 21 is provided in partition wall 23. After gas (e.g. refrigerant gas) introduced from inlet 32 of muffler device 21 into first compartment 24 is once expanded in first compartment 24, it is introduced into second compartment 25 at a choked state by passing through cylindrical body 31 and after being expanded again, it is delivered into suction chamber 27 at a choked state through suction port 28,and it is expanded again there. In the process repeating these expansion, contraction, expansion, contraction and expansion steps, a suction gas pulsation is attenuated and reduced so as to reduce vibrations and noises. Namely, the effect for reducing the pulsation is enhanced by repeating expansion at least twice, as compared with a conventional simple expansion type muffler device. In particular, the effect to reduce a pulsation is more enhanced by dividing internal space 22 of muffler device 21 into two compartments 24,25 and cylindrical body 31 is provided between two compartments 24,25.

Specifically in this example, the overall length L1 of internal space 22 of muffler device 21 is set in a range of 100-120 mm, and the length L2 of cylindrical body 31 is set in a range of 20-50 mm. A suction pulsation with a relatively low frequency (about 500Hz-1000Hz) can be more effectively reduced by setting their sizes within these specified ranges.

Further, by providing muffler device 21 with such specified sizes near suction port 28, gas pulsation can be can effectively reduced. Further, by the structure wherein one wall 29 of muffler device 21 is formed integrally with cylinder block 2, the other wall 64 of muffler device 21 is formed integrally with cylinder head 26, and partition wall 23 is formed by an elongated section of valve plate 30, the number of parts can be reduced, the assembling ability can be improved, and the cost can be reduced.

Fig.2 shows compressor 40 according to an example 2 of the present invention. This example may be effectively applied to the case where 100-120 mm length for the muffler device cannot be ensured in an axial direction of the compressor on the side of the compressor due to limitation in space. At the side (peripheral side) of compressor 40, muffler device 41 is provided, and the direction of gas flow thereof is set at the circumferential direction of compressor 40. In this example, internal space 42 of muffler device 41 is formed by wall 46 which is formed integrally with cylinder block 43 and has opening section 45 at cylinder head 44 side, and elongated section 48 of valve plate 47 which closes opening section 45. After gas (e.g. refrigerant gas) introduced from inlet 49 of muffler device 41 provided on wall 46 of muffler device 41 into internal space 42 is once expanded in internal space 42, the gas is introduced into suction chamber 52 at a choked state through outlet 50 and suction port-cum-communication path 51 which is formed integrally with cylinder head 44, and expanded again there. In a process repeating expansion, contraction and expansion, pulsation of the suction gas pulsation is attenuated and reduced so as to reduce vibration and noise.

In this example, muffler device 41 which can exhibit a predetermined muffling function can be realized by setting a direction of gas flow in muffler device 41 in a circumferential direction of compressor 40, even in a case where a required length in an axial direction of the compressor cannot be taken. Further, by the structure wherein wall 46 of muffler device 41 is formed integrally with cylinder block 43 and opening section 45 thereof is closed by elongated section 48 of valve plate 47, muffler device 41 with a predetermined internal space 42 can be formed without using an adaptor and the like, and therefore, the number of parts can be reduced, the assembling ability can be improved, and the cost can be reduced. Where, although wall 46 of muffler device 41 is formed integrally with cylinder block 43 in this example, it is also possible to form it integrally with cylinder head 44 and to close the opening section thereof by elongated section 48 of valve plate 47.

Fig.3 shows compressor 60 according to an example 3 of the present invention. In this example, internal space 42 of muffler device 61 is further divided into two compartments in a circumferential direction of the compressor by partition wall 62 as compared with the above-described example 2. Notch 63 as a communication path is provided in partition wall 62 so that the divided two compartments are communicated with each other. This communication path may be formed by a cylindrical body similarly to in example 1. The explanation of the other constructions is omitted by providing the same symbols as those in Fig.2, because they are pursuant to example 2.

In muffler device 61 of compressor 60 thus constructed, by dividing internal space 42 of muffler device 61 into two compartments by partition wall 62, refrigerant gas repeats its expansion, contraction, expansion, contraction, expansion in a process in which the gas reaches suction chamber 52 from inlet 49, and therefore, a suction gas pulsation is more effectively attenuated and reduced so as to reduce vibrations and noises. Further similarly to in example 2, by the structure wherein wall 46 of muffler device 61 is formed integrally with cylinder block 43, and opening section 45 thereof is closed by elongated section 48 of valve plate 47, muffler device 61 with a predetermined internal space 42 can be formed without using an adaptor and the like, and consequently, the number of parts can be reduced, the assembling ability can be improved and the cost can be reduced.

Further, in this example, in a case where the two compartments divided by partition wall 62 are communicated with each other by a cylindrical body instead of notch 63 similarly to in example 1, it is preferable that the overall length in the circumferential direction of compressor 60 of internal space 42 in muffler device 61 is set in a range of 100-120 mm, and the length of the cylindrical body is set in a range of 20-50 mm. A suction pulsation with relatively low frequency (about 500Hz-1000Hz) can be more effectively reduced by setting their sizes in such specified ranges, as well as in the example 1.

### Industrial Applications of the Invention

The structure of the muffler device of the compressor according to the present invention can be applied to any reciprocating multi-cylinder compressor, and specifically, it is suitable as a compressor used in an air conditioning system for vehicles which requires to reduce pulsations, as well as, to reduce the number of parts, to simplify the assembly and to reduce the cost.

## Claims

1. A compressor which is a reciprocating compressor in which a plurality of cylinder bores are formed and a muffler device is provided, wherein an internal space of said muffler device is divided into at least two compartments by a partition wall, and to said partition wall, a cylindrical body which allows said two compartments to communicate with each other and has a length of 16 to 50% relative to the overall length of said internal space is provided.

2. The compressor according to claim 1, wherein said overall length of said internal space is in a range of 100 to 120 mm and the length of said cylindrical body is in a range of 20 to 50 mm.

3. The compressor according to claim 1 or 2, wherein a wall of said muffler device is formed integrally with a cylinder head or and a cylinder block, or a cylinder head and and a cylinder block.

4. The compressor according to any of claims 1 to 3, wherein said partition wall is formed by an elongated section of a valve plate interposed between a cylinder head and a cylinder block.

5. The compressor according to any of claims 1 to 4, wherein said compressor is a compressor used in an air conditioning system for vehicles.

6. A compressor which is a reciprocating compressor in which a plurality of cylinder bores are formed and a muffler device is provided, wherein a direction of gas flow in said muffler device is set at a circumferential direction of the compressor.

7. The compressor according to claim 6, wherein said muffler device is provided around either a cylinder block or a cylinder head.

8. The compressor according to claim 6 or 7, wherein an internal space of said muffler device is formed by a wall which is formed integrally with a cylinder block and has an opening section at a cylinder head side and an elongated section of a valve plate interposed between said cylinder head and said cylinder block, said elongated section closing said opening section of said wall.

9. The compressor according to claim 6 or 7, wherein an internal space of said muffler device is formed by a wall which is formed integrally with a cylinder head and has an opening section at a cylinder block side and an elongated section of a valve plate interposed between said cylinder head and said cylinder block, said elongated section closing said opening section of said wall.

10. The compressor according to any of claims 6 to 9, wherein the overall length in a direction of gas flow of an internal space of said muffler device is in a range of 100-120 mm, said internal space is divided into at least two compartments by a partition wall, and to said partition wall, a communication path communicating said two compartments with each other is provided.

11. The compressor according to claim 10, wherein said partition wall is formed integrally with a cylinder block or a cylinder head.

12. The compressor according to claim 10 or 11, wherein said communication path is formed by a notch or a hole provided in said partition wall.

13. The compressor according to claim 10 or 11, wherein said communication path is provided in said partition wall and formed by a cylindrical body having a length in a direction of gas flow in a range of 20-50 mm.

14. The compressor according to any of claims 6-13, wherein said compressor is a compressor used in an air conditioning system for vehicles.
